# EUROPEAN PATENT APPLICATION

(11) **EP 1 170 456 A1**
(43) Date of publication of application: **09.01.2002**
(21) Application number: 00850122.3
(22) Date of filing: 04.07.2000
(51) Int. Cl.: E06B 3/74, F16B 12/12

(54) **Mirror panel door leaf**

(71) Applicant: Sweedor Holding AB, 429 33 Kullavik (SE)
(72) Inventor: Tärnskär, Ingemar, 429 33 Kullavik (SE)
(74) Representative: Mossmark, Anders

(57) **Abstract**

Mirror panel door leaf (1) including two or more substantially vertical frame pieces (2), two or more substantially horizontal frame pieces (3) and at least one mirror panel (4), said mirror panel (4) being joined to said vertical and horizontal frame pieces (2, 3) by means of an edge portion (7) inserted in a longitudinal slot (8) in the vertical and/or horizontal frame pieces (2, 3). An edge face (13) of said edge portion (7) is provided with at least one longitudinal groove (14) opposing said longitudinal slot (8), said groove (14) dividing the edge portion (7) into at least two resilient projections (15), the thickness (A) of said edge portion (7) exceeding the width (B) of said longitudinal slot (8), so that said resilient projections (15) are biased towards opposing surfaces (16) of said slot (8) when the mirror panel (4) and the vertical and/or horizontal frame pieces (2, 3) are joined together.

## Description

### TECHNICAL FIELD

A mirror panel door leaf including two or more substantially vertical frame pieces, two or more substantially horizontal frame pieces and at least one mirror panel. The mirror panel is joined to said horizontal and vertical frame pieces by means of an edge portion inserted in a longitudinal slot in the horizontal and/or vertical frame pieces.

### BACKGROUND

A problem in the manufacturing of mirror panel doors is that it is difficult to avoid visible gaps and/or cracks in the joints between the mirror panel and the horizontal and vertical frame pieces, which are due to a less than perfect fit between the parts. Traditionally, mirror panel doors were originally hand-crafted and each door was individually hand fitted with great precision and skill to avoid said gaps and cracks. However, in large scale modern production of mirror panel doors, the individual skill of the traditional craftsman must generally be replaced with a high precision manufacturing process involving the use of narrow tolerances - and thus high production costs - on adjoining parts to ensure a good fit. Furthermore, the nature of the fibrous materials normally used for the manufacture of door panels, i.e. natural wood or fibre board containing wood fibres, makes it hard to maintain the required narrow tolerances, since for instance moisture content in the material may vary depending on the ambient environment in the manufacturing plant, causing an unwanted swelling of the material.

### DISCLOSURE OF INVENTION

The above problem is solved by providing a mirror panel door leaf including two or more substantially vertical frame pieces, two or more substantially horizontal frame pieces and at least one mirror panel. The mirror panel is joined to said horizontal and vertical frame pieces by means of an edge portion inserted in a longitudinal slot in the vertical and/or horizontal frame pieces. An edge face of said edge portion is provided with at least one longitudinal groove opposing said longitudinal slot, said groove dividing the edge portion into at least two resilient projections. The thickness of said edge portion exceeds the width of said longitudinal slot, so that said resilient projections are biased towards opposing surfaces of said slot when the mirror panel and the vertical and/or horizontal frame pieces are joined together.

Through use of the invention, a wider tolerance of fit between the mirror panel and the horizontal and/or vertical frame pieces may be allowed in the manufacturing process, whilst at the same time eliminating the risk of visible cracks and gaps in the joints of the finished door leaf. Thus, the invention offers a quality improvement in the finish of the door as well as a lower manufacturing cost due to a wider acceptable tolerance span.

In a preferred embodiment of the invention, a base portion of each resilient projection is biased towards an opposing mouth portion of said longitudinal slot.

In an advantageous embodiment of the invention, said edge face is adapted to abut a bottom face of said longitudinal slot.

Furthermore, said edge face is adapted to abut a bottom face of said longitudinal slot.

Preferably, the depth of the groove exceeds the depth of the slot, and the edge portion has chamfered edges in order to facilitate insertion into the longitudinal slot.

Further, in the preferred embodiment, the mirror panel is joined to said horizontal and vertical frame pieces by an adhesive applied on its edge portion and/or in the longitudinal slot of said horizontal and vertical frame pieces. The groove is adapted to receive a portion of said adhesive in order to increase the effective bonding area between the edge portion and the longitudinal slot, as well as - if necessary - accommodate for any excess of adhesive in the slot, said excess being due either to variations in the dimensions of the slot or simply to an excessive distribution of adhesive.

The mirror panel is preferably at least partially made of medium density fibre board.

The invention thus provides a mirror panel door leaf designed according to the principle of *robust design,* i. e. *a* design which accommodates for errors in tolerances or specifications whilst still being fully functioning.

### BRIEF DESCRIPTION OF DRAWINGS

A preferred embodiment of the invention will be described in detail below, with reference to the accompanying drawing, in which:
- Fig. 1: is a frontal view of a mirror door according to the invention;
- Fig. 2: is a broken cross-sectional view of a mirror panel shown immediately before insertion into the longitudinal groove of the horizontal and/or vertical frame pieces, and
- Fig. 3: is a broken cross-sectional view - taken along the dotted line III-III in Fig. 1 - of a mirror panel, shown after insertion into the longitudinal groove of the horizontal and/or vertical frame pieces.
- Fig. 4: is a broken cross-sectional view of an alternative embodiment of the invention, in which the edge face of the edge portion is provided with two parallel longitudinal grooves.

### MODE(S) FOR CARRYING OUT THE INVENTION

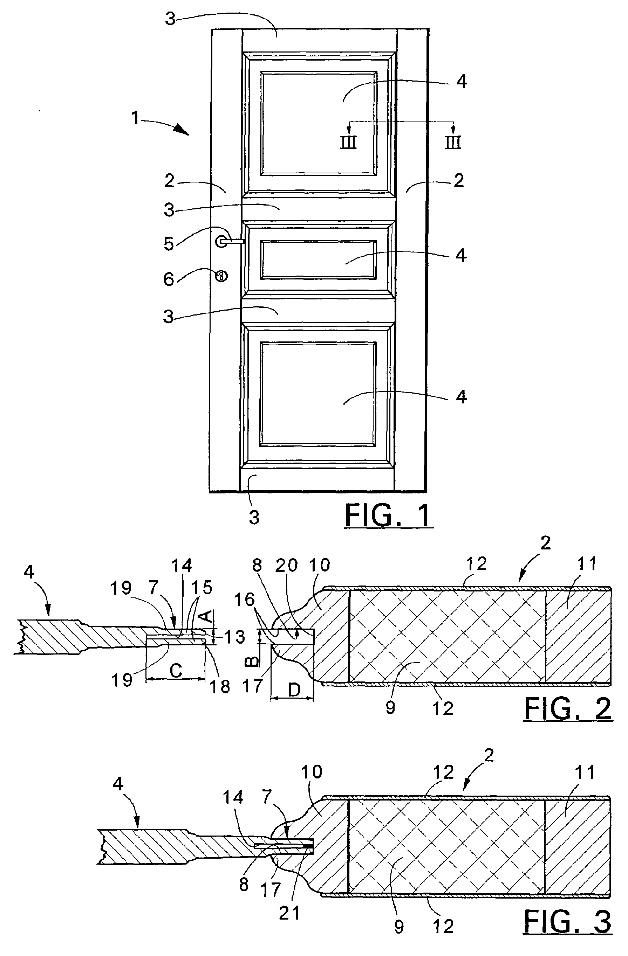

In fig. 1, the reference numeral 1 denotes a mirror panel door according to an embodiment of the invention. The mirror panel door leaf 1 includes two vertical frame pieces 2, four horizontal frame pieces 3 and three rectangular mirror panels 4. This constitutes the most common build-up of a traditional mirror door leaf 1, but it is to be understood that the invention is also applicable to other, alternative configurations and patterns (not shown) including any number of mirror panels 4. In a conventional manner, one of the vertical frame members 2 is provided with a door handle 5 and a keyhole plate 6.

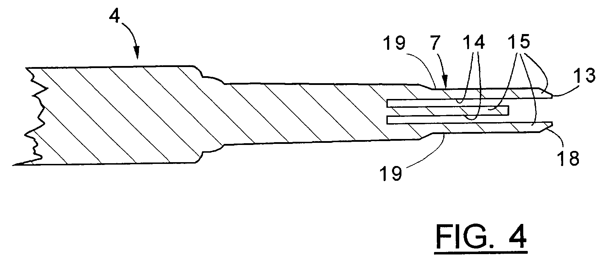

As shown in the cross sectional views of fig. 2 and 3, each mirror panel 4 is joined to said vertical and horizontal frame pieces 2, 3 by means of an edge portion 7 adapted to be inserted in a longitudinal slot 8 in the horizontal and vertical frame pieces 2, 3. In fig. 2, the mirror panel 4 is shown just prior to insertion into the longitudinal slot 1 in the frame piece 2, whereas in fig. 3, it is shown inserted and glued into said slot 8. Furthermore, figs. 2 and 3 show a vertical composite frame piece 2 consisting of a core 9 made of low density fibre board (LDF), a profiled inner frame element 10 and an outer frame element 11, all being sandwiched between two cover layers 12. The profiled inner frame element 10 and an the outer frame element 11 are both preferably made of medium density fibre board (MDF), whereas the two cover layers 12 are made of high density fibre board (HDF). It is to be understood, however, that the frame piece 2 may alternatively be made of solid wood, or the composite structure may be altered in a plurality of ways. Furthermore, the mirror panel 4 may alternatively be made of low density fibre board (LDF), high density fibre board (HDF) or any composite combination of LDF, MDF and HDF board materials.

An edge face 13 of said edge portion 7 is provided with a longitudinal groove 14 opposing said longitudinal slot 8, said groove 14 dividing the edge portion 7 into two resilient projections 15. The thickness ("A" in fig. 2) of said edge portion 7 exceeds the width ("B" in fig. 2) of said longitudinal slot 8, so that said resilient projections 15 are biased towards opposing surfaces 16 of said slot 8 when the mirror panel 4 and the vertical and/or horizontal frame pieces 2, 3 are joined together. This bias thus results in a press-fit between the slot 8 of the frame piece 2 and the edge portion 7 of the mirror panel 4, which eliminates any unwanted visible gaps between said two parts. The resilient projections 15 will, however, still bend easily enough to avoid the formation of cracks at the mouth portion 17 of the slot 8, should the thickness B of the edge-portion 7 be at or near its upper acceptable tolerance limit. In fig. 3, the resilient projections 15 are shown with a slightly exaggerated inward inclination toward the edge face 13 of the edge portion 7.

As may readily be seen in figs. 2 and 3, the edge portion 7 of the mirror panel 4 exhibits obliquely chamfered edges 18 in order to facilitate insertion into the longitudinal slot 8. Alternatively, said chamfered edges 17 may be rounded (not shown).

In an alternative, but not shown embodiment of the invention, only a base portion 19 of each resilient projection 15 is biased towards said mouth portion 17 of said longitudinal slot 8, whereas the remainder of the resilient projections 15 are chamfered slightly towards the edge face 13.

Further, the edge face 13 of the edge portion 7 is adapted to abut a bottom face 20 of the longitudinal slot 8, in order to ensure a positive stopping point at the insertion of the edge portion 7 into the slot 8.
In order to provide an optimum resilience to the resilient projections 15, the depth C of the groove 14 exceeds the depth D of the slot 8, as can clearly be seen in fig. 2.

The mirror panel 4 is joined to said horizontal and vertical frame pieces 2, 3 by an adhesive 21 applied on its edge portion 13 and/or in the longitudinal slot 8 of said horizontal and vertical frame pieces 2, 3. Thus, the groove 14 is adapted to receive a portion of said adhesive 21 in order to increase the effective bonding area between the edge portion 13 and the longitudinal slot 8, as well as to - if necessary - accommodate for any excess of adhesive in the slot, said excess being due either to variations in the dimensions of the slot or simply to an excessive distribution of adhesive.

In fig. 4, an alternative embodiment of the invention is shown, in which the edge face 13 of the edge portion 7 is provided with two parallel longitudinal grooves 14, and thus has three resilient projections 15. In this embodiment, however, the middle projection 15 is not biased towards the opposing surfaces 16 of the slot 8 in the frame piece 2,3 (not shown).

The invention is not limited to the embodiments shown in the drawings or described above, and may be varied within the scope of the appended claims.

## Claims

1. Mirror panel door leaf (1) including two or more substantially vertical frame pieces (2), two or more substantially horizontal frame pieces (3) and at least one mirror panel (4), said mirror panel (4) being joined to said vertical and horizontal frame pieces (2, 3) by means of an edge portion (7) inserted in a longitudinal slot (8) in the vertical and/or horizontal frame pieces (2, 3), **characterized in that** an edge face (13) of said edge portion (7) is provided with at least one longitudinal groove (14) opposing said longitudinal slot (8), said groove (14) dividing the edge portion (7) into at least two resilient projections (15), the thickness (A) of said edge portion (7) exceeding the width (B) of said longitudinal slot (8), so that said resilient projections (15) are biased towards opposing surfaces (16) of said slot (8) when the mirror panel (4) and the vertical and/or horizontal frame pieces (2, 3) are joined together.

2. Mirror door leaf (1) according to claim 1, **characterized in that** a base portion (19) of each resilient projection (15) is biased towards an opposing mouth portion (17) of said longitudinal slot (8).

3. Mirror door leaf (1) according to claim 1 or 2, **characterized in that** said edge face (13) is adapted to abut a bottom face (20) of said longitudinal slot (8).

4. Mirror door leaf (1) according to any of the preceding claims, **characterized in that** the depth (C) of the groove (14) exceeds the depth (D) of the slot (8).

5. Mirror door leaf (1) according any of the preceding claims, **characterized in that** said edge portion (7) has chamfered edges (18).

6. Mirror door leaf (1) according to any of the preceding claims, where the mirror panel (4) is joined to said horizontal and vertical frame pieces (2, 3) by an adhesive (21) applied on its edge portion (13) and/or in the longitudinal slot (8) of said horizontal and vertical frame pieces (2, 3), **characterized in that** the groove (14) is adapted to receive a portion of said adhesive (21) in order to increase the effective bonding area between the edge portion (13) and the longitudinal slot (8), as well as to accommodate for any excess of adhesive in the slot.

7. Mirror door leaf (1) according any of the preceding claims, **characterized in that** the mirror panel is at least partially made of medium density fibre board.
